# EUROPÄISCHE PATENTSCHRIFT

(11) **EP 1 616 661 B1**
(45) Veröffentlichungstag und Bekanntmachung des Hinweises auf die Patenterteilung: **12.03.2008**
(21) Anmeldenummer: 04016654.8
(22) Anmeldetag: 15.07.2004
(51) Int. Cl.: B23Q 7/04, B23Q 7/14

(54) **Bearbeitungsmaschine mit Werkstückwechsler**
Machine tool with workpiece changing device
Machine d'usinage avec dispositif de changement de pièces

(43) Veröffentlichungstag der Anmeldung: 18.01.2006
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, 78598 Königsheim (DE)
(74) Vertreter: Vetter, Hans

(56) Entgegenhaltungen:
- GB-A- 2 135 604
- US-A- 4 373 840
- US-A- 4 781 512
- US-A- 5 781 983

## Beschreibung

Die Erfindung betrifft einer Anordnung zum Verfahren von Werkstücken oder Werkstückpaletten gemäß dem Oberbegriff des Anspruchs 1.

Bei einer derartigen, aus der US-A-5781983 bekannten Anordnung dient der Werkstückwechsler gleichzeitig als Werkstückhalter bei der Bearbeitung.

Bei einem aus der EP 1 321 224 B1 bekannten Werkstückwechsler ist die Greifereinrichtung schwenkbar am freien Ende eines Schwenkhebels angeordnet. Die Überlagerung der beiden erforderlichen Schwenkbewegungen erfordert eine relativ komplizierte Bewegungssteuerung, und eine Speicheranordnung oder ein Rüstplatz muss relativ nahe am Werkstücktisch angeordnet sein, um sich noch im Schwenkbereich des Schwenkarms zu befinden.

Ein aus der DE 198 53 945 A1 bekannter Werkstückwechsler besitzt einen um eine vertikale Achse schwenkbaren Doppelgreifer mit einer vertikalen Hubeinrichtung. Dieser Werkstückwechsler benötigt einen mindestens in einer linearen und horizontalen Achse verfahrbaren Werkstücktisch der Bearbeitungsmaschine und muss daher auch direkt am Maschinengestell der Bearbeitungsmaschine angeordnet sein. Da nicht alle Bearbeitungsmaschinen einen derart verfahrbaren Werkstücktisch besitzen, ist dieser bekannte Werkstückwechsler nur sehr eingeschränkt einsetzbar. Er muss direkt am Maschinengestell des Bearbeitungszentrums angeordnet sein, wodurch sich eine sehr schlechte Zugänglichkeit zum Arbeitsbereich der Bearbeitungsmaschine ergibt.

Ein aus der EP 1 201 354 A2 bekannter Werkstückwechsler besitzt ebenfalls einen um eine vertikale Achse schwenkbaren Doppelgreifer, wobei ein Rüstplatz in räumlichem Abstand zur Bearbeitungsmaschine angeordnet werden kann. Hierzu ist allerdings eine zusätzliche Lineartransportanordnung erforderlich, wobei die Übergabe von Werkstücken oder Werkstückträgern zwischen Doppelgreifer und Lineartransportanordnung technisch aufwändig und zeitaufwändig ist. Für die gesamte Anordnung ist auch ein relativ großer Platzbedarf erforderlich. Da der Doppelgreifer vom Rüstplatz oder einer Speicheranordnung nicht räumlich entkoppelt werden kann, ist auch seine Funktionsmöglichkeit eingeschränkt.

Eine Aufgabe der vorliegenden Erfindung besteht darin, einen Werkstückwechsler der eingangs genannten Gattung zu schaffen, der von der Bearbeitungsmaschine entkoppelt ist, das rationellere Umsetzen von Werkstükken oder Werkstückpaletten zwischen einer relativ weit vom Werkstücktisch entfernten Speicheranordnung und diesem Werkstücktisch ermöglicht und eine gute Zugänglichkeit zur Bearbeitungsmaschine bzw. zu deren Werkstücktisch gewährleistet.

Diese Aufgabe wird erfindungsgemäß durch eine Anordnung mit den Merkmalen des Anspruchs 1 gelöst.

Der erfindungsgemäße Anordnung ermöglicht eine sehr gute Zugänglichkeit zur Bearbeitungsmaschine, da der Werkstückwechsler mittels des Linearantriebs während der Bearbeitung in eine nicht störende Parkposition weggefahren werden kann. Dadurch wird der Zugangsbereich vor der Maschine frei für eine Bedienperson. Eine lineare Bewegung des Werkstücktisches ist nicht erforderlich, so dass der Werkstückwechsler für unterschiedlichste Maschinengattungen verwendet werden kann. Die Greifereinrichtung kann sowohl von der Speicheranordnung, als auch vom Bearbeitungstisch, also der Bearbeitungsmaschine entkoppelt werden. Die Greifereinrichtung führt sämtliche erforderlichen Bewegungen aus, so dass nur ein Transportsystem erforderlich ist und keine Übergabevorgänge von Werkstücken oder Paletten im Bereich zwischen Werkstücktisch und Speicheranordnung erforderlich sind. Die Speicheranordnung besitzt zweckmäßigerweise wenigstens einen Wechselplatz für die Übergabe und Übernahme von Werkstücken oder Werkstückpaletten durch die Greifereinrichtung, wobei eine Fördereinrichtung zum Zuführen und Abführen von Paletten- und/oder Werkstückaufnahmen zum und vom Wechselplatz vorgesehen ist.

Die Greifereinrichtung besitzt einen Doppelgreifer mit zwei nach entgegengesetzten Richtungen weisenden Greifern. In der Ausführung als Doppelgreifer können die Wechselvorgänge noch rationeller durchgeführt werden, da gleichzeitig beispielsweise ein bearbeitetes Werkstück auf der einen Seite und ein unbearbeitetes Werkstück auf der anderen Seite (oder Werkstückpaletten) transportiert werden kann.

Durch die in den Unteransprüchen aufgeführten Maßnahmen sind vorteilhafte Weiterbildungen und Verbesserungen der im Anspruch 1 angegebenen Anordnung möglich.

Die Fördereinrichtung kann bevorzugt als Endlosfördereinrichtung, insbesondere als Kettenförderer oder Drehteller, oder als Linearförderer ausgebildet sein.

Die Fördereinrichtung insgesamt oder ihre Paletten- und/oder Werkstückaufnahmen und/oder die Greifereinrichtung können in einer vorteilhaften Variante mit einem Verfahrantrieb zum Wechselplatz versehen sein. Dieser verläuft vorzugsweise quer zur Bewegungsrichtung des Linearantriebs, falls der Wechselplatz seitlich der Bewegungsbahn des Linearantriebs positioniert ist. Weiterhin kann auch die Fördereinrichtung insgesamt oder ihre Paletten- und/oder Werkstückaufnahmen und/oder die Greifereinrichtung mit einem Hubantrieb versehen sein.

In vorteilhafter Weise kann auch noch ein Rüstplatz am Ende oder seitlich des Linearantriebs vorgesehen sein, wobei bei seitlicher Anordnung die Greifereinrichtung mit einem Verfahrantrieb quer zur Bewegungsrichtung des Linearantriebs versehen ist. Dieser Rüstplatz kann mit denselben ohnehin vorhandenen Bewegungsmechanismen für das Umsetzen von Werkstücken oder Werkstückpaletten zwischen Speicheranordnung und Werkstücktisch bedient werden. Es ist lediglich ein zusätzlicher Verfahrantrieb quer zur Bewegungsrichtung des Linearantriebs erforderlich.

Die Greifereinrichtung ist an einem horizontal verfahrbaren Schlitten oder Wagen angeordnet, der mit der Hubeinrichtung und dem Drehantrieb versehen ist. An diesem Schlitten sind somit sämtliche Bewegungsvorgänge integriert. Er ist zweckmäßigerweise an einer seitlichen Führungseinrichtung geführt, die dadurch zum Werkstücktisch versetzt angeordnet ist und eine noch bessere Zugänglichkeit gewährleistet.

Die Greifer sind zum Untergreifen eines Werkstücks oder einer Werkstückpalette ausgebildet und besitzen vorzugsweise zwei Greif- und/oder Hubarme. Sie können prinzipiell jedoch auch gemäß dem eingangs angegebenen Stand der Technik (z.B. EP 1 321 224 B1) ausgebildet sein.

Die Greifer können auch zwei Greif- und/oder Hubarme besitzen, die greifbackenartig gegeneinander bewegbar sind. Hierdurch können verschiedenartige Werkstücke und/oder Werkstückpaletten umgesetzt werden.

In der erfindungsgemäßen Anordnung ist der Werkstückwechsler in vorteilhafter Weise als selbständige Einheit vor einer Bearbeitungsmaschine positionierbar, so dass ein Einsatz unabhängig von der Art der Bearbeitungsmaschine möglich ist und auch einfache Nachrüstungen realisierbar sind.

Ausführungsbeispiele der Erfindung sind in der Zeichnung dargestellt und in der nachfolgenden Beschreibung näher erläutert. Es zeigen:
- Figur 1: eine perspektivische Darstellung eines Werkstückwechslers mit einem Rüstplatz und einer Speicheranordnung für Werkstücke und/oder Werkstückpaletten in einer perspektivischen Darstellung als erstes Ausführungsbeispiel der Erfindung,
- Figur 2: ein zweites Ausführungsbeispiel in einer Ansicht von oben mit einer geänderten Verfahrantriebsanordnung und
- Figur 3: ein drittes Ausführungsbeispiel in einer Ansicht von oben mit einer anders gestalteten Speicheranordnung und einer geänderten Anordnung des Rüstplatzes.

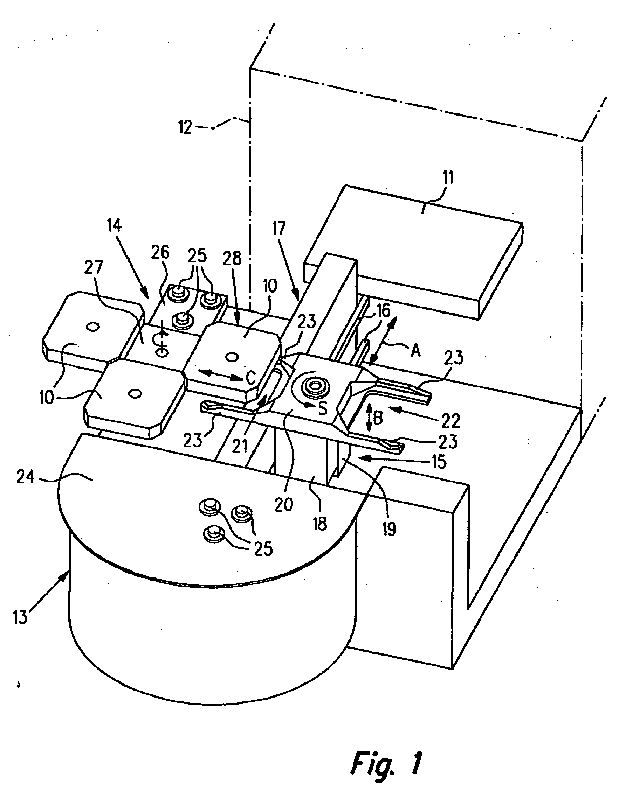

Der in Figur 1 dargestellte Werkstückwechsler dient zum Umsetzen von Werkstücken und/oder Werkstückpaletten 10 zwischen einem Werkstücktisch 11 einer im Übrigen nur schematisch dargestellten Bearbeitungsmaschine 12 und einem Rüstplatz 13 sowie zwischen einer Speicheranordnung 14 für Werkstückpaletten 10 oder Werkstücke und dem Werkstücktisch 11 und/oder dem Rüstplatz 13. Bei der Bearbeitungsmaschine 12 kann es sich beispielsweise um eine Fräsmaschine oder ein Bearbeitungszentrum handeln, das noch weitere Bearbeitungsvorgänge durchführen kann.

Eine Schlittenanordnung 15 ist an zwei horizontalen Führungsschienen 16 einer Führungseinrichtung 17 geführt, die sich im Zwischenraum zwischen dem Werkstücktisch 11 und dem Rüstplatz 13 befindet. Ein nicht dargestellter Linearantrieb (linearer Antrieb bzw. linear verfahrbarer Antrieb), beispielsweise ein Zahnriemen, ein Linearmotorantrieb, ein Spindelantrieb oder ein Fluidikantrieb, bewegt einen ersten Schlitten 18 horizontal entlang der Führungsschienen 16. An diesem ersten Schlitten 18 ist ein zweiter Schlitten 19 vertikal geführt und angetrieben und dient als Hubeinrichtung für eine an seiner Oberseite angeordnete Greifereinrichtung 20. Diese Greifereinrichtung 20 ist am zweiten Schlitten 19 mittels eines nicht näher dargestellten Drehantriebs um eine vertikale Achse verschwenkbar.

Die Greifereinrichtung 20 ist als Doppelgreifereinrichtung ausgebildet und besitzt zwei nach entgegengesetzten Richtungen weisende Greifer 21, 22, die je zwei U-förmig angeordnete Greifarme 23 besitzen. Diese dienen zum Untergreifen und Anheben bzw. Absenken von Werkstückpaletten 10 oder Werkstücken.

Der Rüstplatz 13 kann fest an der gesamten Werkstückwechslereinrichtung montiert oder als separater Rüsttisch ausgebildet sein. Auf einer Rüstplatte 24 ist eine aus drei Positionierelementen 25 bestehende Positioniereinrichtung für Werkstückpaletten 10 angeordnet, wobei die Werkstückpaletten 10 zu diesem Zweck entsprechende Ausnehmungen an der Unterseite besitzen. Selbstverständlich können auch andere bekannte Positioniereinrichtungen für Werkstückpaletten 10 oder Werkstücke vorgesehen sein, die auch auswechselbar sein können.

Die Speicheranordnung 14, die beispielsweise als Zwischenspeicher für Werkstückpaletten 10 oder Werkstücke ausgebildet sein kann und auch häufig als Palettenbahnhof bezeichnet wird, ist als Rundtakteinrichtung mit einem nicht näher dargestellten Drehantrieb ausgebildet. Eine vier Palettenaufnahmen 26 aufweisende Halteeinrichtung 27 ist um eine vertikale Achse taktweise schwenkbar, derart, dass immer eine Palettenaufnahme 26 bzw. eine sich darauf befindliche Werkstückpalette 10 an einem Wechselplatz 28 angeordnet ist, der zur Greifereinrichtung 20 hin positioniert ist. Die gesamte Speicheranordnung 14 ist seitlich der Führungseinrichtung 17 angeordnet, wobei der Wechselplatz 28 die Führungseinrichtung 17 übergreift.

In der Darstellung gemäß Figur 1 ist die Greifereinrichtung zur Übernahme einer Werkstückpalette 10 von der Speicheranordnung 14 positioniert. Durch Anheben des zweiten Schlittens 19 gelangen die beiden Greifarme 23 des einen Greifers 21 unter die Werkstückpalette 10 am Wechselplatz 28 und heben diese an. Nach einem Schwenkvorgang um 90° in der Schwenkrichtung S und eine anschließende Linearbewegung des ersten Schlittens 18 kann die Werkstückpalette 10 auf den Rüstplatz 13 abgesenkt werden und dort je nach Arbeitsvorgang bestückt, nachbestückt oder auf andere Weise für den Bearbeitungsvorgang vorbereitet werden. Das Absenken für den Rüstplatz 13 erfolgt wiederum mittels des zweiten Schlittens 19. Die Werkstückpalette 10 kann jedoch auch direkt dem Werkstücktisch 11 zugeführt werden. Hierzu macht die Greifereinrichtung 20 und der Schlittenanordnung 15 aus eine Schwenkbewegung um 90° gegen die Schwenkrichtung S und kann dann die Werkstückpalette 10 mittels einer Linearbewegung des ersten Schlittens 18 und ein anschließendes Absenken dem Werkstücktisch 11 zuführen.

Beim Umsetzen einer Werkstückpalette 11 zwischen Rüstplatz 13 und Werkstücktisch 11 macht die Greifereinrichtung 20 eine Schwenkbewegung um 180°. Dies ist beispielsweise dann der Fall, wenn eine auf dem Rüstplatz 13 vorbereitete Werkstückpalette 10 dem Werkstücktisch 11 zugeführt wird oder wenn eine auf dem Werkstücktisch 11 bearbeitete Werkstückpalette 10 anschließend wieder dem Rüstplatz 13 zugeführt wird, um das oder die darauf befindlichen Werkstücke entweder zu reinigen oder abzumontieren.

Da die Greifereinrichtung 20 als Doppelgreifer ausgebildet ist, kann beispielsweise eine zur Bearbeitung vorbereitete Werkstückpalette 10 dem Werkstücktisch 11 zugeführt werden, wobei zunächst der leere Greifer eine dort bereits bearbeitete Werkstückpalette 10 anhebt und nach einem Schwenkvorgang um 180° die unbearbeitete Werkstückpalette 10 auf den Werkstück-tisch 10 absenkt.

Die vier Palettenaufnahmen 26 der Halteeinrichtung 27 sind ebenfalls mit entsprechenden Positionierelementen 25 versehen, um Werkstückpaletten 10 zu positionieren. Da die Speicheranordnung 14 in dargestellten Ausführungsbeispiel mit drei Werkstückpaletten 10 belegt ist, ist nur eine der vier Palettenaufnahmen 26 sichtbar.

Falls die Greifarme 23 nicht bis zum Wechselplatz 28 reichen, kann die Schlittenanordnung 15 oder können die einzelnen Palettenaufnahmen 26 mit einem nicht näher dargestellten Verfahrantrieb ausgestattet sein, die ein horizontales Verfahren in der Richtung C senkrecht zur Bewegungsrichtung A des Linearantriebs des ersten Schlittens 18 ermöglichen.

Die Führungseinrichtung 17 ist seitlich versetzt zum Werkstücktisch 11 angeordnet, und der erste Schlitten 18 ist seitlich an dieser Führungseinrichtung 17 geführt. Hierdurch kann der erste Schlitten 18 und mit Ihm selbstverständlich der zweite Schlitten 19 und die Greifereinrichtung 20 während der Bearbeitung vom Werkstücktisch 11 weggefahren werden, so dass eine gute Zugänglichkeit zu diesem bei der Bearbeitung gewährleistet ist. In einer alternativen Ausgestaltung können die Führungsschienen prinzipiell auch am Boden der Werkstückwechsleranordnung angeordnet sein, wobei der erste Schlitten 18 auch als Wagen oder dergleichen ausgebildet sein kann.

Im dargestellten Ausführungsbeispiel sind die Greifarme 23 der Greifer 21, 22 als starre Arme und zum Untergreifen von Werkstückpaletten 10 ausgebildet. Alternativ oder zusätzlich können die Greifarme 23 auch nach Art von Greifbacken gegeneinander bewegbar sein, um unterschiedliche Werkstückpaletten 10 oder unterschiedlich geformte Werkstücke ergreifen zu können.

Die Anordnung von Rüstplatz 13 und Speicheranordnung 14 ist auch umgekehrt möglich, d.h., die Speicheranordnung 14 ist dann am Ende der Führungseinrichtung 17 und der Rüstplatz 13 seitlich dieser Führungseinrichtung 17 angeordnet. Weiterhin kann in einer einfacheren Ausführung auch nur ein Rüstplatz 13 oder nur eine Speicheranordnung 14 vorgesehen sein. Insbesondere für den Fall, dass nur eine Speicheranordnung 14 vorgesehen ist, kann anstelle des Vertikalhubs in der Vertikalrichtung B durch den zweiten Schlitten 19 dieser auch entfallen, und die Speicheranordnung 14 oder die Halteeinrichtung 27 bzw. die einzelnen Palettenaufnahmen 26 sind mit einer Hubvorrichtung zur Bewegung in der Vertikalrichtung B ausgestattet. Auch hierdurch ist es möglich, Paletten auf die Greifereinrichtung 20 abzusenken oder von dieser anzuheben. Zum Ablegen auf den Werkstücktisch 11 muss dieser dann ebenfalls einen Vertikalantrieb besitzen.

Die gesamte Werkstückwechsleranordnung kann fest an eine Bearbeitungsmaschine 12 anmontiert oder als komplette Wechsleranordnung nur vor dieser positioniert werden.

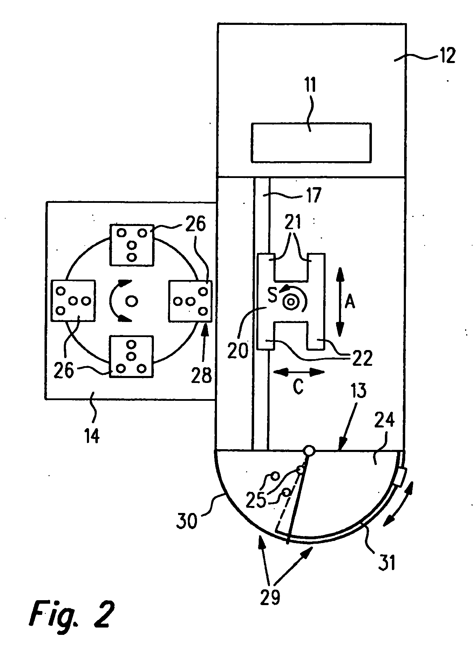

Das in Figur 2 dargestellte Ausführungsbeispiel entspricht weitgehend dem in Figur 1 dargestellten Ausführungsbeispiel, wobei gleiche oder gleichwirkende Bauteile oder Baugruppen mit denselben Bezugszeichen versehen und nicht nochmals beschrieben sind. Im Unterschied zum ersten Ausführungsbeispiel besitzt die Speicheranordnung 14 oder deren Palettenaufnahmen 26 keinen Verstellantrieb in der Verstellrichtung C. Ein solcher ist dafür in der Schlittenanordnung 15 für die Greifereinrichtung 20 integriert. Dies bedeutet, dass ein nicht dargestellter dritter Schlitten am zweiten Schlitten 19 in der Verstellrichtung C motorisch bewegbar ist. Es ist selbstverständlich auch möglich, dass zusätzlich solche Verstellantriebe in der Speicheranordnung 14 vorgesehen sind.

Beim zweiten Ausführungsbeispiel ist der Rüstplatz 13 mit einer Abschirmwandung 29 versehen, die sich vom Boden aus oder von der Ebene der Rüstplatte 24 aus vertikal nach oben erstreckt. Sie besteht aus einem festen Wandbereich 30 und einem schwenkbaren Wandbereich 31, der sich in den festen Wandbereich 30 hinein und darüber hinaus verschwenken lässt, um Werkstücke oder Werkstückpaletten 11 vorbereiten oder nachbereichten zu können.

Es sei noch erwähnt, dass die Speicheranordnung 14 selbstverständlich nicht nur vier Palettenaufnahmen 26 aufweisen muss, sondern die Zahl kann auch kleiner und insbesondere auch großer sein.

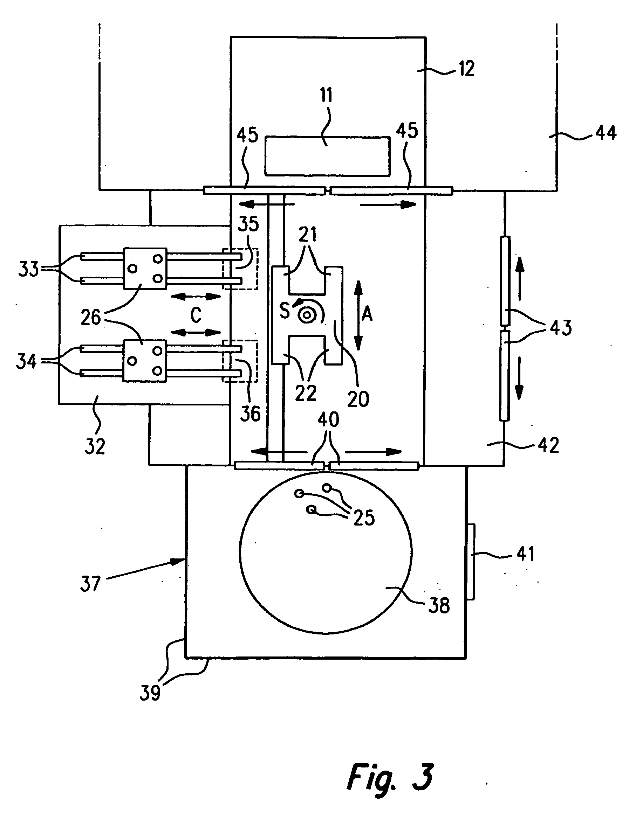

Bei dem in Figur 3 dargestellten dritten Ausführungsbeispiel sind wiederum gleiche oder gleichwirkende Bauteile oder Baugruppen mit denselben Bezugszeichen versehen und nicht nochmals beschrieben. Anstelle der Speicheranordnung 14 mit einem Drehtisch oder Drehteller tritt jetzt eine Speicheranordnung 32 mit zwei Linearführungen 33, 34, entlang denen Palettenaufnahmen 26 mittels nicht dargestellter Linearantriebe zu Wechselplätzen 35, 36 hin und zurück bewegbar sind, um von dort durch die Greifereinrichtung 20 übernommen zu werden oder von dieser aus abgelegt zu werden. Im einfachsten Falle kann auch nur eine Linearführung 33 bzw. 34 oder können eine größere Zahl von Linearführungen vorgesehen sein. Nach der Abnahme einer Werkstückpalette 10 oder eines Werkstücks wird die jeweilige Palettenaufnahme 26 jeweils vom zugeordneten Wechselplatz 35 bzw. 36 wegbewegt, um an einer nicht näher dargestellten Übergabestelle beispielsweise zu einem Hauptspeicher abgenommen oder beladen zu werden.

Bei diesem Ausführungsbeispiel ist ein Rüstplatz 37 mit einer runden Rüstplatte 38 vorgesehen, die wiederum am Ende der Führungseinrichtung 17 fest oder lose angeordnet sein kann. Der Rüstplatz 37 ist dabei als Rüstkammer mit Seitenwandungen 39 ausgebildet, wobei Schiebetüren 40 den Rüstplatz 37 zur Führungseinrichtung 17 hin öffnen und schließen können. Eine Tür 41 für eine den Rüstvorgang vornehmende Person ist ebenfalls vorgesehen.

Auch die Führungseinrichtung 17 ist in einer Führungskammer 42 angeordnet, die Schiebetüren 43 als Zugang besitzt. Diese Führungskammer 42 grenzt an eine kammerartige Umwandung 44 der Bearbeitungsmaschine 12 an, wobei wiederum Schiebetüren 45 den Zugang zum Werkstücktisch 11 öffnen oder verschließen.

Auch die Ausführungsbeispiele gemäß den Figuren 2 und 3 können in einfacheren Ausführungen nur einen Rüstplatz oder nur eine Speicheranordnung besitzen, die seitlich und/oder am Ende der Führungseinrichtung 17 positioniert sein können.

## Patentansprüche

1. Bearbeitungsmaschine mit einem eine Speicheranordnung (14; 32) für Werkstücke und/oder Werkstückpaletten (10) aufweisenden Werkstückwechsler zum Verfahren solcher Werkstücke oder Werkstückpaletten (10) zwischen der Speicheranordnung (14; 32) und einer Bearbeitungsposition der Bearbeitungsmaschine (12), mit einer Greifereinrichtung (20) zum Aufnehmen und Absetzen von Werkstücken oder Werkstückpaletten (10), mit einem Drehantrieb zum Verschwenken der Greifereinrichtung (20) um eine vertikale Achse, mit einem Linearantrieb (16 - 18) zum Verfahren der Greifereinrichtung (20) zwischen einer ersten Position an der Speicheranordnung (14; 32) und der Bearbeitungsposition, wobei die Speicheranordnung (14; 32) wenigstens einen Wechselplatz (28; 35, 36) für die Übergabe und Übernahme von Werkstücken oder Werkstückpaletten (10) **durch** die Greifereinrichtung (20) besitzt, und wobei eine Fördereinrichtung zum Zuführen und Abführen von Paletten- und/oder Werkstückaufnahmen (26) zum und vom Wechselplatz (28; 35, 36) vorgesehen ist, **dadurch gekennzeichnet, dass** der Werkstückwechsler zum Umsetzen der Werkstücke oder Werkstückpaletten (10) zwischen der Speicheranordnung (14; 32) und einem Werkstücktisch (11) der Bearbeitungsmaschine (12) ausgebildet ist und als selbständige Einheit vor der Bearbeitungsmaschine (12) positionierbar ist und der Linearantrieb (16 - 18) zum Wegfahren der Greifereinrichtung (20) vom Werkstücktisch (11) während der Bearbeitung in eine Parkposition ausgebildet ist, und dass die Greifereinrichtung (20) einen Doppelgreifer mit zwei nach entgegengesetzten Richtungen weisenden Greifern (21, 22) aufweist.

2. Bearbeitungsmaschine nach Anspruch 1, **dadurch gekennzeichnet, dass** die Fördereinrichtung als Endlosfördereinrichtung, insbesondere als Kettenförderer oder Drehteller (27) oder als Linearförderer (33, 34) ausgebildet ist.

3. Bearbeitungsmaschine nach Anspruch 1 oder 2, **dadurch gekennzeichnet, dass** die Fördereinrichtung insgesamt oder ihre Paletten- und/oder Werkstückaufnahmen (26) und/oder die Greifereinrichtung (20) mit einem Verfahrantrieb zum Wechselplatz (28; 35, 36) versehen sind.

4. Bearbeitungsmaschine nach Anspruch 3, **dadurch gekennzeichnet, dass** die Bewegungsrichtung (C) des Verfahrantriebs quer zur linearen Bewegungsbahn (A) des Linearantriebs (16 - 18) verläuft.

5. Bearbeitungsmaschine nach einem der vorhergehenden Ansprüche, **dadurch gekennzeichnet, dass** die Fördereinrichtung insgesamt oder ihre Paletten- und/oder Werkstückaufnahmen (26) und/oder die Greifereinrichtung (20) einen Hubantrieb aufweisen.

6. Bearbeitungsmaschine nach einem der vorhergehenden Ansprüche, **dadurch gekennzeichnet, dass** ein Rüstplatz (13; 37) am Ende oder seitlich des Linearantriebs (16 - 18) vorgesehen ist, wobei bei seitlicher Anordnung die Greifereinrichtung (20) mit einem Verfahrantrieb quer zur Bewegungsrichtung (A) des Linearantriebs (16 - 18) versehen ist.

7. Bearbeitungsmaschine nach einem der vorhergehenden Ansprüche, **dadurch gekennzeichnet, dass** die Greifereinrichtung (20) an einem horizontal verfahrbaren Schlitten (18) oder Wagen angeordnet ist, der mit der Hubeinrichtung (19) und dem Drehantrieb versehen ist.

8. Bearbeitungsmaschine nach Anspruch 7, **dadurch gekennzeichnet, dass** der Schlitten (18) oder Wagen an einer seitlichen Führungseinrichtung (16, 17) geführt ist.

9. Bearbeitungsmaschine nach einem vorhergehenden Ansprüche, **dadurch gekennzeichnet, dass** die Greifer (21, 22) zum Untergreifen eines Werkstücks oder einer Werkstückpalette (10) ausgebildet sind und vorzugsweise zwei Greif- und/oder Hubarme (23) besitzen.

10. Bearbeitungsmaschine nach einem der vorhergehenden Ansprüche, **dadurch gekennzeichnet, dass** die Greifer (21, 22) zwei Greif- und/oder Hubarme besitzen, die greifbackenartig gegeneinander bewegbar sind.

## Claims

1. Machining centre with a workpiece changer containing a storage unit (14; 32) for workpieces and/or work pallets (10), for the transfer of such workpieces or work pallets (10) between the storage unit (14; 32) and a machining position of the machining centre (12), with a gripper unit (20) for the picking up and putting down of workpieces or work pallets (10), with a rotary drive for swivelling the gripper unit (20) around a vertical axis, with a linear drive (16-18) for moving the gripper unit (20) between a first position at the storage unit (14; 32) and the machining position, wherein the storage unit (14; 32) has at least one changeover point (28; 35, 36) for the transfer to and fro of workpieces or work pallets (10) by the gripper unit (20), and wherein a conveyor is provided to feed pallet and/or work holders (26) to and remove them from the changeover point (28; 35, 36), **characterised in that** the workpiece changer is designed to transfer the workpieces or work pallets (10) between the storage unit (14; 32) and a worktable (11) of the machining centre (12) and may be positioned as an independent unit in front of the machining centre (12), and the linear drive (16-18) is designed to move the gripper unit (20) away from the worktable (11) into a parking position during machining, and that the gripper unit (20) has a double gripper with two grippers (21, 22) facing in opposite directions.

2. Machining centre according to claim 1, **characterised in that** the conveyor is in the form of an endless conveyor, in particular a chain conveyor or rotary disc (27) or a linear conveyor (33, 34).

3. Machining centre according to claim 1 or 2, **characterised in that** the conveyor as a whole or its pallet and/or work holders (26) and/or the gripper unit (20) are provided with a traversing drive to the changeover point (28; 35, 36).

4. Machining centre according to claim 3, **characterised in that** the direction of movement (C) of the traversing drive runs at right-angles to the linear movement path (A) of the linear drive (16-18).

5. Machining centre according to any of the preceding claims, **characterised in that** the conveyor as a whole or its pallet and/or work holders (26) and/or the gripper unit (20) has or have a lifting drive.

6. Machining centre according to any of the preceding claims, **characterised in that** a tooling point (13; 37) is provided at the end or to the side of the linear drive (16-18) wherein, in the case of side mounting, the gripper unit (20) is provided with a traversing drive at right-angles to the direction of movement (A) of the linear drive (16-18).

7. Machining centre according to any of the preceding claims, **characterised in that** the gripper unit (20) is mounted on a horizontally traversing slide (18) or carriage which is provided with the lifting device (19) and the rotary drive.

8. Machining centre according to claim 7, **characterised in that** the slide (18) or carriage is guided on a side guide unit (16, 17).

9. Machining centre according to any of the preceding claims, **characterised in that** the grippers (21, 22) are designed to grip a workpiece or a work pallet (10) from below, and preferably have two gripping and/or lifting arms (23).

10. Machining centre according to any of the preceding claims, **characterised in that** the grippers (21, 22) have two gripping and/or lifting arms which may be moved towards one another in the manner of gripping jaws.

## Revendications

1. Machine d'usinage avec un dispositif de changement de pièce à usiner, présentant un dispositif de stockage (14 ; 32) pour pièces et/ou palettes de pièces (10), permettant de déplacer de telles pièces ou palettes de pièces (10) entre le dispositif de stockage (14 ; 32) et une position d'usinage de la machine d'usinage (12), avec un dispositif de préhension (20) permettant de prendre en charge et de déposer des pièces ou des palettes de pièces (10), avec un entraînement rotatif permettant de faire pivoter le dispositif de préhension (20) autour d'un axe vertical, avec un entraînement linéaire (16 - 18) permettant de déplacer le dispositif de préhension (20) entre une première position au niveau du dispositif de stockage (14 ; 32) et la position d'usinage, le dispositif de stockage (14 ; 32) disposant d'au moins un poste de changement (28 ; 35, 36) pour la remise et la prise en charge de pièces ou de palettes de pièces (10) par le dispositif de préhension (20), et un dispositif de transport permettant d'amener et d'évacuer des porte-palettes et/ou porte-pièces (26) à destination ou en provenance du poste de changement (28 ; 35, 36) étant prévu, **caractérisée en ce que** le dispositif de changement de pièce est conçu pour déplacer les pièces ou les palettes de pièces (10) entre le dispositif de stockage (14 ; 32) et une table porte-pièce (11) de la machine d'usinage (12) et peut être positionné sous forme d'unité autonome devant la machine d'usinage (12) et l'entraînement linéaire (16 - 18) permettant d'éloigner le dispositif de préhension (20) de la table porte-pièce (11) pendant l'usinage est réalisé dans une position de parking, et **en ce que** le dispositif de préhension (20) présente une double griffe avec deux griffes (21, 22) dirigées en sens inverse.

2. Machine d'usinage selon la revendication 1, **caractérisée en ce que** le dispositif de transport est réalisé sous forme de dispositif de transport sans fin, en particulier comme transporteur à chaîne ou plateau tournant (27) ou sous forme de transporteur linéaire (33, 34).

3. Machine d'usinage selon la revendication 1 ou 2, **caractérisée en ce que** le dispositif de transport dans son ensemble ou ses porte-palettes et/ou porte-pièces (26) et/ou le dispositif de préhension (20) sont pourvus d'un mécanisme de déplacement vers le poste de changement (28 ; 35, 36).

4. Machine d'usinage selon la revendication 3, **caractérisée en ce que** le sens de déplacement (C) de l'entraînement du mécanisme de déplacement s'étend transversalement à la trajectoire de déplacement linéaire (A) de l'entraînement linéaire (16 - 18).

5. Machine d'usinage selon l'une des revendications précédentes, **caractérisée en ce que** le dispositif de transport dans son ensemble ou ses porte-palettes et/ou porte-pièces (26) et/ou le dispositif de préhension (20) présentent une commande de levage.

6. Machine d'usinage selon l'une des revendications précédentes, **caractérisée en ce qu'**un poste de montage (13 ; 37) est prévu à l'extrémité ou sur le côté de l'entraînement linéaire (16 - 18), dans le cas d'un agencement latéral le dispositif de préhension (20) étant pourvu d'un mécanisme de déplacement transversalement à la direction de déplacement (A) de l'entraînement linéaire (16 - 18).

7. Machine d'usinage selon l'une des revendications précédentes, **caractérisée en ce que** le dispositif de préhension (20) est disposé au niveau d'un traînard (18) ou chariot déplaçable horizontalement, qui est pourvu du dispositif de levage (19) et de l'entraînement rotatif.

8. Machine d'usinage selon la revendication 7, **caractérisée en ce que** le traînard (18) ou chariot est guidé au niveau d'un dispositif de guidage latéral (16, 17).

9. Machine d'usinage selon l'une des revendications précédentes, **caractérisée en ce que** les griffes (21, 22) sont conçues pour saisir une pièce ou une palette de pièces (10) par le bas et possèdent de préférence deux bras de préhension et/ou de levage (23).

10. Machine d'usinage selon l'une des revendications précédentes, **caractérisée en ce que** les griffes (21, 22) possèdent deux bras de préhension et/ou de levage qui peuvent être déplacés l'un vers l'autre à la manière de mâchoires de préhension.
